# EUROPEAN PATENT APPLICATION

(11) **EP 4 813 546 A1**
(43) Date of publication of application: **30.09.2026**
(21) Application number: 24893082.8
(22) Date of filing: 15.10.2024
(51) Int. Cl.: B22F 1/00, B22F 9/08, B22F 1/14, B33Y 10/00, C22C 21/08

(54) **ERBIUM-CONTAINING ALUMINUM ALLOY FOR ADDITIVE MANUFACTURING, AND PREPARATION METHOD THEREFOR AND USE THEREOF**

(30) Priority: 20.11.2023 CN 202311540672
(71) Applicant: Avimetal AM Tech Co., Ltd., Beijing 100176 (CN)
(72) Inventor: GAO, Zhengjiang, Beijing 100176 (CN); LI, Hui, Beijing 100176 (CN); MA, Teng, Beijing 100176 (CN); WANG, Wei, Beijing 100176 (CN); ZHANG, Fei, Beijing 100176 (CN); CHEN, Xin, Beijing 100176 (CN)
(74) Representative: Neves, Ana
(86) International application number: PCT/CN2024/124871
(87) International publication number: WO 2025/107923

(57) **Abstract**

This application relates to the technical field of additive manufacturing, and in particular, to an erbium-containing aluminum alloy for additive manufacturing, and a preparation method and use thereof. Alloying elements in the aluminum alloy by mass percentage are: W (Mg): 4.0% to 7.0%; W (Mn): 0.5% to 0.8%; W (Er): 0.61% to 1.5%; W (Sc): 0.1% to 0.4%; W (Si) + W (Fe): 0.4% to 0.7%; and the remainder is Al, satisfying: 0.2% ≤ W (Fe) ≤ 0.34 W (Er), and 2.6W (Sc) + 0.7W (Er) ≤ W (Zr) ≤ 2.1%. The preparation method of the aluminum alloy includes alloy powder preparation, additive manufacturing, and heat treatment. The alloy powder preparation includes raw material melting, atomization to make powder, powder sieving, and drying. The aluminum alloy exhibits high formability, a wide forming process window, and a high density of the formed components. After being subjected to heat treatment, the aluminum alloy possesses excellent mechanical properties at both room temperature and elevated temperatures.

## Description

### TECHNICAL FIELD

This application relates to the technical field of additive manufacturing, and in particular, to an erbium-containing aluminum alloy for additive manufacturing, and a preparation method and use thereof.

### BACKGROUND

Currently, aluminum alloys for laser-based additive manufacturing are mainly conventional cast alloy grades, which incurs the following problems:
(1) Al-Si based near-eutectic alloys, represented by AlSi₁₀Mg and AlSi₁₂, are currently the most suitable aluminum alloys for additive manufacturing by virtue of a low melting point and narrow solidification temperature range. Although the mechanical strength in the as-deposited state of the Al-Si based near-eutectic alloys is superior to that of conventional cast Al-Si alloys, the Al-Si based near-eutectic alloys possess tensile strength of approximately 450 MPa and an elongation as low as 6%, and is of much lower strength after heat treatment, thereby being unable to meet the operating requirements of high-performance parts; (2) conventional 2xxx series (Al-Cu based) and 7xxx series (Al-Zn based) medium-to-high-strength aluminum alloys are prone to hot cracking during additive manufacturing because such aluminum alloys exhibit a wide solidification temperature range, thereby being a critical bottleneck restricting further development, and currently, research is focused on how to improve the hot cracking resistance of these two types of alloys and improve the printability of the alloys; (3) conventional Al-Mg based 5xxx series medium-strength aluminum alloys are typically not suitable for additive manufacturing and heat treatment strengthening, but after being alloyed using elements such as Sc or Zr, the printability of the aluminum alloys is improved, and Al₃ (Sc, Zr) nanoscale precipitates can be formed during heat treatment. The Nanoscale precipitates exhibit a significant second-phase strengthening effect, thereby greatly improving the mechanical properties of alloys. Therefore, a Sc-Zr co-strengthened Al-Mg alloy for additive manufacturing has attracted extensive attention and is currently a hot research subject. The most representative example is Scalmalloy alloy (Al-Mg-Sc-Zr).

However, for Scalmalloy and Al-Mg alloys with similar components, avoiding a hot cracking tendency and improving mechanical properties largely depend on the addition of a large amount of the rare earth element Sc (> 0.66 wt%), but Sc is expensive, resulting in high cost and hindering large-scale application. In addition, although Sc-Zr co-strengthening significantly improves the room-temperature mechanical strength of the alloys, the alloy incurs poor high-temperature mechanical properties and thermal stability, thereby limiting broader application of the alloys. It is well-known that existing aluminum alloys exhibit drastic performance degradation at elevated temperatures. Alloys for additive manufacturing such as Al-Si series, Scalmalloy alloys, 2000 series, and 7000 series aluminum alloys exhibit a maximum tensile strength of merely approximately 147 MPa at 200 °C, and the operating temperature is generally below 200 °C, thereby failing to meet the new requirements for heat resistance of aluminum alloy components in aerospace and automotive industries. For Al-Mg series alloys, Chinese Patent Application CN115874088A discloses a high-strength, heat-resistant, and damage-tolerant aluminum alloy Al-Mg-Ca-Sc-Mn-Zr. With high additions of Ca and Sc, the tensile strength of the alloy at 250 °C is approximately 172 MPa. However, the room-temperature tensile strength of the alloy is relatively low (below 500 MPa), and the high Sc content increases cost. Chinese Patent Application CN115194140A discloses an Al-Mg series aluminum-based composite powder, in which Al-Mg-Sc-Zr powder is uniformly mixed with Co-Cr-Ni medium-entropy alloy powder and erbium oxide powder for 3D printing. The printed test pieces of the composite powder exhibit excellent high-temperature strength but an elongation as low as 5% and relatively low room-temperature mechanical strength (below 500 MPa) while the high Sc content also increases cost. In addition, existing technical solutions address the technical challenges of vulnerability to cracking of conventional Al-Mg alloys in additive manufacturing through the combined addition of rare earth elements, such as Zr, Ti, Si, and other elements. However, this may incur a narrow process window in a printing process.

Therefore, based on Al-Mg alloys, achieving low-cost, high-quality additive manufacturing in addition to superior room-temperature and high-temperature performance has become a pressing challenge to be addressed in the development of high-performance aluminum alloys for additive manufacturing in the new era.

### SUMMARY

To address the disadvantages of existing technologies, this application provides an erbium- containing aluminum alloy for additive manufacturing, and a preparation method and use thereof. The aluminum alloy exhibits high formability, a wide forming process window, and a high density of the formed test piece. After being subjected to heat treatment, the aluminum alloy possesses excellent mechanical properties at both room temperature and elevated temperatures.

This application puts forward the following technical solutions to the above technical problem: an erbium-containing aluminum alloy for additive manufacturing is provided. Alloying elements in the aluminum alloy by mass percentage are: W (Mg): 4.0% to 7.0%; W (Mn): 0.5% to 0.8%; W (Er): 0.61% to 1.5%; W (Sc): 0.1% to 0.4%; W (Si) + W (Fe): 0.4% to 0.7%; and the remainder is Al, satisfying: 0.2% ≤ W (Fe) ≤ 0.34 W (Er), and 2.6W (Sc) + 0.7W (Er) ≤ W (Zr) ≤ 2.1%.

Further, the alloying elements in the aluminum alloy by mass percentage are: W (Mg): 4.0% to 7.0%; W (Mn): 0.5% to 0.7%; W (Er): 0.61% to 1.2%; W (Sc): 0.1% to 0.4%; W (Si) + W (Fe): 0.5% to 0.7%; and the remainder is Al, satisfying: 0.2% ≤ W (Fe) ≤ 0.34 W (Er), and 2.6W (Sc) + 0.7W (Er) ≤ W (Zr) ≤ 1.8%.

This application further discloses a preparation method of an erbium-containing aluminum alloy for additive manufacturing, and the preparation method includes:

S1: raw material melting: heating and melting pure metal or master alloy raw materials in vacuum condition based on a formulation to obtain a pre-alloyed metal;

S2: atomization to make powder: atomizing the melted pre-alloyed metal using argon to obtain pre-alloyed metal powder;

S3: powder sieving: sieving and classifying the pre-alloyed metal powder prepared in step S2 in an inert gas protection atmosphere;

S4: heat preservation and drying: drying the powder sieved in step S3 to obtain aluminum alloy powder.

Further, in step S1, the melting is performed at a temperature of 700 °C to 850 °C for a duration of 10 to 40 minutes.

Further, in step S2, an atomization gas pressure for the atomization to make powder is 0.8 to 4.0 MPa.

Further, in step S3, a pressure of the inert gas protection atmosphere is 0.05 to 0.95 MPa, and a particle size range of the sieved powder is 15 to 53 µm.

Further, in step S4, the drying is performed at a temperature of 100 °C to 120 °C for a duration of 4 to 12 hours.

This application further discloses an erbium-containing aluminum alloy for additive manufacturing, and a preparation method and use thereof. The aluminium alloy powder described can be used to produce alloy components via additive manufacturing techniques.

Further, process parameters of the additive manufacturing are as follows: a laser power is 250 to 400 W; a laser scanning speed is 900 to 1500 mm/s; a hatch spacing is 0.09 to 0.11 mm; and a layer thickness is 0.02 to 0.04 mm.

Further, the alloy component formed using an additive manufacturing technique is subjected to heat treatment to obtain a final product.

The heat treatment is performed at a temperature of 312 °C to 405 °C. The temperature is kept for a duration of 2 to 8 hours. The alloy component is cooled together with a furnace to obtain the final product.

Further, the heat treatment is performed at a temperature of (T±5) °C, where T = 432 - 25000W(Sc) - 1000W(Er).

The functions of the elements in the erbium-containing aluminum alloy for additive manufacturing according to this application are as follows:
1) Mg: as a primary alloying element, Mg can be supersaturatedly dissolved in an aluminum matrix during rapid solidification to provide solid solution strengthening;
2) Mn: Mn mainly provides solid solution strengthening, and can also form an Al₆Mn strengthening phase to provide second-phase strengthening.
3) Sc: Sc forms a Al₃Sc primary phase during the solidification, and can serve as heterogeneous nucleation sites to promote the formation of equiaxed grains and suppress hot cracking. Moreover, during heat treatment, Sc forms Al₃Sc nanoscale precipitates to provide precipitation strengthening.
4) Zr: Zr plays a role similar to that of Sc, and can also co-precipitate with Sc or Er to form a Al₃ (Sc, Zr) or Al₃ (Er, Zr) phase, thereby improving thermal stability;
5) Er: Er forms an Al₃Er eutectic phase at grain boundaries during the solidification to refine the grains and strengthen the grain boundary, and pins the grain boundary at a high temperature to suppress grain growth; and forms Al₃Er nanoscale precipitates during heat treatment to provide precipitation strengthening;
6) Si: Si reduces the solidification temperature range and improves the ability to heal incipient cracks. In addition, Si forms a Mg₂Si strengthening phase to provide second-phase strengthening;
7) Fe: Fe improves melt fluidity, and inhibit hot cracking, and enhances formability.

This application achieves at least the following beneficial effects:
(1) The aluminum alloy of this application exhibits relatively high mechanical strength at both a room temperature and elevated temperatures.

Through the addition of a combination of Er, Zr, and Sc, a Al₃M phase (where M is one or more of Er, Zr, or Sc) can be formed during solidification and subsequent heat treatment, thereby achieving significant effects of grain-refinement strengthening and second-phase strengthening. Unlike the prior art, this application further increases the contents of Er and Zr, thereby further improving the room-temperature mechanical strength. In addition, to improve the high-temperature performance of the alloy, this application establishes a proportional relationship between the Zr content and the contents of Er and Sc on the basis of increased Er and Zr contents, and imposes a lower limit on the addition of Zr. On the other hand, this application optimizes the heat treatment regime, and establishes a relationship between the heat treatment temperature and the contents of Sc and Er, and employs different heat treatment temperatures for the alloys with different rare-earth contents.

Specifically, the Er element forms an Al₃ (Er, M) phase at the grain boundary, refines grains, and pins the grain boundary during heat treatment and at elevated temperatures, thereby hindering grain boundary migration, suppressing grain growth, and improving the structural stability of the alloy. Increasing the Er content is beneficial for improving the mechanical strength of the alloy at both a room temperature and elevated temperatures.

Zr can combine with Er and Sc to form a Al₃M composite phase. Compared with a single Al₃Sc or Al₃Er phase, the composite phase exhibits a lower coarsening tendency, thereby improving high-temperature strength and thermal stability of the alloy. Through appropriate heat treatment, the elements such as Zr, Er, and Sc can fully diffuse within the Al₃M phase to form a complete and stable core-shell structure, in which the inner core is enriched in Er or Sc and the outer shell is enriched in Zr. This structure effectively suppresses coarsening of the Al₃M precipitates and maximizes the strengthening effect and thermal stability of the phase. Therefore, only when the Zr addition is sufficient and the heat treatment regime is appropriate can the nanoscale Al₃M precipitates be formed in a rapid and fine-dispersed manner, and can a complete core-shell structure be fully formed. This applications controls the minimum Zr addition and the heat treatment temperature, thereby ensuring that the Al₃M phase is structurally stable and provides a significant strengthening effect. As a result, the alloy exhibits relatively high mechanical strength at both a room temperature and elevated temperatures in addition to high thermal stability. The aluminum alloy in this application exhibits room-temperature tensile strength greater than or equal to 510 MPa, an elongation greater than or equal to 10%, 250 °C tensile strength greater than or equal to 180 MPa, and an elongation greater than or equal to 30%.

(2) This application innovatively introduces Fe. Through the synergistic effect of Fe and Si, the alloy exhibits a wide process window, a high density, and excellent formability. In the prior art, suppression of hot cracking during additive manufacturing of Al-Mg alloys is mainly achieved by adding rare-earth elements, Zr, Ti, Si, and the like. By contrast, Fe is generally used as a common impurity element and is controlled at a relatively low content. In conventional techniques, a small amount of Fe is added for a main purpose of enabling Fe to absorb other impurity elements in the alloy, thereby suppressing the formation of brittle grain-boundary phases or providing solid-solution strengthening, and improving stress corrosion resistance and mechanical properties of the material. However, in this application, an appropriate amount of Fe is added. Fe and Al undergo a eutectic reaction at 660 °C, thereby producing a significant effect in improving melt fluidity and shrinkage-feeding capability. Through the combined addition and synergistic effect of Fe and Si, the hot-cracking resistance of the alloy is further enhanced. Compared with the addition of Si alone, the alloy exhibits a wider process window and a higher density. However, the Fe content needs to be controlled to fall within a reasonable range. Excessive Fe tends to combine with the elements such as Al, Si, Er, and Mn to form relatively coarse intermetallic compounds, thereby weakening the effects of Er and other elements in the alloy, and is detrimental to the mechanical properties of the alloy. Therefore, in this application, the contents of Fe and Si are controlled to achieve excellent formability and crack-free printing of the alloy with a density of over 99.5% within a relatively wide process window (at an energy density of 50 to 150 J/mm³).

In addition, the alloy of this application contains a relatively low amount of Sc, thereby significantly reducing production cost.

In summary, for the purposes of achieving excellent room-temperature and high-temperature mechanical properties of Al-Mg-based alloys as well as low-cost and high-quality printing, this application uses Er and Zr in place of a part of Sc and employs a composite strengthening route that combines Er, Zr, and Sc. For different contents of Er and Sc, this application synergistically optimizes the Zr addition and the heat treatment temperature, thereby ultimately obtaining an alloy that contains a large number of grain-boundary pinning phases, in which the nanoscale precipitates are formed sufficiently in a fine-dispersed manner, a complete core-shell structure is formed, and the grains are refined. In addition, Si-Fe composite microalloying is employed to further enhance the hot cracking resistance, improve formability, and broaden the process window, thereby significantly improving the printing quality and production stability.

### BRIEF DESCRIPTION OF DRAWINGS

FIG. 1 is a schematic diagram illustrating room-temperature mechanical properties of an aluminum alloy formed using an additive manufacturing technique according to Embodiments 1 to 3 and Comparative Embodiments 1 to 4 of this application;
FIG. 2 is a schematic diagram illustrating high-temperature (250 °C) mechanical properties of an aluminum alloy formed using an additive manufacturing technique according to Embodiments 1 to 3 and Comparative Embodiments 1, 2, and 4 of this application;
FIG. 3 is a metallographic image of an aluminum alloy formed using an additive manufacturing technique according to Embodiment 3 of this application; and
FIG. 4 is a metallographic image of an aluminum alloy formed using an additive manufacturing technique according to Comparative Embodiment 3 of this application.

### DETAILED DESCRIPTION

To make the above objectives, features, and advantages of this application more apparent and comprehensible, the following describes specific embodiments of this application in detail. Many details are expounded in the following description to facilitate thorough understanding of this application. However, this application can be implemented in many other ways different from those described herein. A person skilled in the art may make similar improvements without departing from the essence of this application. Therefore, this application is not limited to the specific embodiments disclosed below.

Unless otherwise defined, all technical and scientific terms used herein bear the same meanings as what is normally understood by a person skilled in the technical field of this application. The terms used in the specification of this application are merely intended to describe specific embodiments but not to limit this application.

An erbium-containing aluminum alloy for additive manufacturing is provided. Alloying elements in the aluminum alloy by mass percentage are: W (Mg): 4.0% to 7.0%; W (Mn): 0.5% to 0.8%; W (Er): 0.61% to 1.5%; W (Sc): 0.1% to 0.4%; W (Si) + W (Fe): 0.4% to 0.7%; and the remainder is Al, satisfying: 0.2% ≤ W (Fe) ≤ 0.34 W (Er), and 2.6W (Sc) + 0.7W (Er) ≤ W (Zr) ≤ 2.1%.

Specifically, the alloying elements in the aluminum alloy by mass percentage are: W (Mg): 4.0% to 7.0%; W (Mn): 0.5% to 0.7%; W (Er): 0.61% to 1.2%; W (Sc): 0.1% to 0.4%; W (Si) + W (Fe): 0.5% to 0.7%; and the remainder is Al, satisfying: 0.2% ≤ W (Fe) ≤ 0.34 W (Er), and 2.6W (Sc) + 0.7W (Er) ≤ W (Zr) ≤ 1.8%.

A preparation method of an erbium-containing aluminum alloy for additive manufacturing is provided. The preparation method includes:
S1: raw material melting: heating and melting pure metal or master alloy raw materials in vacuum conditions based on a formulation to obtain a pre-alloyed metal;
S2: atomization to make powder: atomizing the melted pre-alloyed metal using argon to obtain pre-alloyed metal powder;
S3: powder sieving: sieving and classifying the pre-alloyed metal powder prepared in step S2 in an inert gas protection atmosphere;
S4: heat preservation and drying: drying the powder sieved in step S3 to obtain aluminum alloy powder.

Specifically, in step S1, the melting is performed at a temperature of 700 °C to 850 °C for a duration of 10 to 40 minutes.

Specifically, in step S2, an atomization gas pressure for the atomization to make powder is 0.8 to 4.0 MPa.

Specifically, in step S3, a pressure of the inert gas protection atmosphere is 0.05 to 0.95 MPa, and a particle size range of the sieved powder is 15 to 53 µm.

In step S4, the drying is performed at a temperature of 100 °C to 120 °C for a duration of 4 to 12 hours.

An erbium-containing aluminum alloy for additive manufacturing, and a preparation method and use thereof are provided. Aluminum alloy components are prepared using an additive manufacturing technique.

Specifically, process parameters of the additive manufacturing are as follows: a laser power is 250 to 400 W; a laser scanning speed is 900 to 1500 mm/s; a hatch spacing is 0.09 to 0.11 mm; and a layer thickness is 0.02 to 0.04 mm.

Specifically, the alloy component formed using an additive manufacturing technique is subjected to heat treatment to obtain a final alloy test piece product.

The heat treatment is performed at a temperature of 312 °C to 405 °C, the temperature is kept for a duration of 2 to 8 hours, and the alloy component is cooled together with a furnace to obtain the final alloy test piece product.

More specifically, the heat treatment is performed at a temperature of (T±5) °C, where T = 432 - 25000W(Sc) - 1000W(Er).

### Embodiment 1

Chemical components of an erbium-containing aluminum alloy for additive manufacturing (by mass fraction, the same below) are: W (Mg): 7.0%; W (Mn): 0.5%; W (Er): 1.2%; W (Sc): 0.2%; W (Zr): 1.4%, W (Si): 0.3%, W (Fe): 0.4%, and the remainder is Al.

A preparation method of the aluminum alloy powder includes:
(1) Raw material melting: Heating and melting pure Al, Al-Mg, Al-Mn, Al-Si, Al-Fe, Al-Er, Al-Zr, and Al-Sc alloy raw materials in vacuum conditions according to a formulation at a melting temperature of 710 °C for 40 minutes.
(2) atomization to make powder: atomizing the melted pre-alloyed metal at a gas pressure of 4.0 MPa using argon to obtain powder.
(3) powder sieving: sieving and classifying the prepared pre-alloyed metal powder in an inert gas protection atmosphere at a pressure of 0.1 MPa to obtain alloy powder that falls within a particle size range of 15 to 53 µm.
(4) heat preservation and drying: drying the powder sieved in step (3) at a temperature of 120 °C for 5 hours to obtain aluminum alloy powder.

Performing formation of the aluminum alloy powder through an additive manufacturing technique. The process parameters of the additive manufacturing are as follows: the laser power is 250 W, the laser scanning speed is 1500 mm/s, the hatch spacing is 0.11 mm, and the layer thickness is 0.02 mm.

Performing heat treatment on the alloy components formed using an additive manufacturing technique at a temperature of 375 °C, keeping the temperature for a duration of 4 hours, and cooling the components together with the furnace to obtain a final aluminum alloy product.

Specific data such as the printing energy density, density, tensile strength at a room temperature (25 °C) and a high temperature (250 °C), and elongation-at-break of the alloy components are shown in Table 1.

### Embodiment 2

Chemical components of an erbium-containing aluminum alloy for additive manufacturing are: W (Mg): 5.0%; W (Mn): 0.6%; W (Er): 0.9%; W (Sc): 0.4%; W (Zr): 1.8%, W (Si): 0.3%, W (Fe): 0.3%, and the remainder is Al.

A preparation method of the aluminum alloy powder includes:
(1) Raw material melting: Heating and melting pure Al, Al-Mg, Al-Mn, Al-Si, Al-Fe, Al-Er, Al-Zr, and Al-Sc alloy raw materials in vacuum conditions according to a formulation at a melting temperature of 850 °C for 15 minutes.
(2) atomization to make powder: atomizing the melted pre-alloyed metal at a gas pressure of 0.9 MPa using argon to obtain powder.
(3) powder sieving: sieving and classifying the prepared pre-alloyed metal powder in an inert gas protection atmosphere at a pressure of 0.9 MPa to obtain alloy powder that falls within a particle size range of 15 to 53 µm.
(4) heat preservation and drying: drying the powder sieved in step (3) at a temperature of 100 °C for 11 hours to obtain aluminum alloy powder.

Performing formation of the aluminum alloy powder through an additive manufacturing technique. The process parameters of the additive manufacturing are as follows: the laser power is 400 W, the laser scanning speed is 900 mm/s, the hatch spacing is 0.1 mm, and the layer thickness is 0.04 mm.

Performing heat treatment on the alloy components formed using an additive manufacturing technique at a temperature of 325 °C, keeping the temperature for a duration of 5 hours, and cooling the components together with the furnace to obtain a final aluminum alloy product.

Specific data such as the printing energy density, density, tensile strength at a room temperature (25 °C) and a high temperature (250 °C), and elongation-at-break of the alloy components are shown in Table 1.

### Embodiment 3

Chemical components of an erbium-containing aluminum alloy powder for additive manufacturing are: W (Mg): 4.0%; W (Mn): 0.7%; W (Er): 0.61%; W (Sc): 0.1%; W (Zr): 0.69%, W (Si): 0.3%, W (Fe): 0.2%, and the remainder is Al.

A preparation method of the aluminum alloy powder includes:
(1) Raw material melting: Heating and melting pure Al, Al-Mg, Al-Mn, Al-Si, Al-Fe, Al-Er, Al-Zr, and Al-Sc alloy raw materials in vacuum conditions according to a formulation at a melting temperature of 800 °C for 25 minutes.
(2) atomization to make powder: atomizing the melted pre-alloyed metal at a gas pressure of 2 MPa using argon to obtain powder.
(3) powder sieving: sieving and classifying the prepared pre-alloyed metal powder in an inert gas protection atmosphere at a pressure of 0.45 MPa to obtain alloy powder that falls within a particle size range of 15 to 53 µm.
(4) heat preservation and drying: drying the powder sieved in step (3) at a temperature of 110 °C for 8 hours to obtain aluminum alloy powder.

Performing formation of the aluminum alloy powder through an additive manufacturing technique. The process parameters of the additive manufacturing are as follows: the laser power is 300 W, the laser scanning speed is 1200 mm/s, the hatch spacing is 0.09 mm, and the layer thickness is 0.03 mm.

Performing heat treatment on the alloy components formed using an additive manufacturing technique at a temperature of 400 °C, keeping the temperature for a duration of 2 hours, and cooling the components together with the furnace to obtain a final aluminum alloy product.

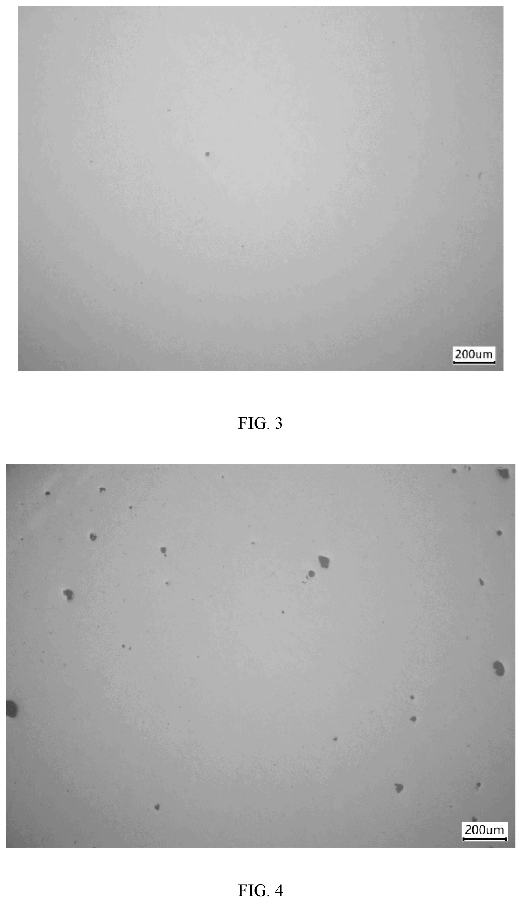

Specific data such as the printing energy density, density, tensile strength at a room temperature (25 °C) and a high temperature (250 °C), and elongation-at-break of the alloy components are shown in Table 1. The metallographic image is shown in FIG. 3.

### Embodiment 4

Chemical components of an erbium-containing aluminum alloy powder for additive manufacturing (by mass fraction, the same below) are: W (Mg): 7.0%; W (Mn): 0.5%; W (Er): 1.2%; W (Sc): 0.2%; W (Zr): 1.4%, W (Si): 0.3%, W (Fe): 0.4%, and the remainder is Al.

A preparation method of the aluminum alloy powder includes:
(1) Raw material melting: Heating and melting pure Al, Al-Mg, Al-Mn, Al-Si, Al-Fe, Al-Er, Al-Zr, and Al-Sc alloy raw materials in vacuum conditions according to a formulation at a melting temperature of 700 °C for 40 minutes.
(2) atomization to make powder: atomizing the melted pre-alloyed metal at a gas pressure of 0.8 MPa using argon to obtain powder.
(3) powder sieving: sieving and classifying the prepared pre-alloyed metal powder in an inert gas protection atmosphere at a pressure of 0.05 MPa to obtain alloy powder that falls within a particle size range of 15 to 53 µm.
(4) heat preservation and drying: drying the powder sieved in step (3) at a temperature of 120 °C for 4 hours to obtain aluminum alloy powder.

Performing formation of the aluminum alloy powder through an additive manufacturing technique. The process parameters of the additive manufacturing are as follows: the laser power is 250 W, the laser scanning speed is 1500 mm/s, the hatch spacing is 0.1 mm, and the layer thickness is 0.03 mm.

Performing heat treatment on the alloy components formed using an additive manufacturing technique at a temperature of 365 °C, keeping the temperature for a duration of 8 hours, and cooling the components together with the furnace to obtain a final aluminum alloy product.

Specific data such as the printing energy density, density, tensile strength at a room temperature (25 °C) and a high temperature (250 °C), and elongation-at-break of the alloy components are shown in Table 1.

### Embodiment 5

Chemical components of an erbium-containing aluminum alloy powder for additive manufacturing are: W (Mg): 5.0%; W (Mn): 0.6%; W (Er): 0.9%; W (Sc): 0.4%; W (Zr): 1.8%, W (Si): 0.3%, W (Fe): 0.3%, and the remainder is Al.

A preparation method of the aluminum alloy powder includes:
(1) Raw material melting: Heating and melting pure Al, Al-Mg, Al-Mn, Al-Si, Al-Fe, Al-Er, Al-Zr, and Al-Sc alloy raw materials in vacuum conditions according to a formulation at a melting temperature of 850 °C for 10 minutes.
(2) atomization to make powder: atomizing the melted pre-alloyed metal at a gas pressure of 3 MPa using argon to obtain powder.
(3) powder sieving: sieving and classifying the prepared pre-alloyed metal powder in an inert gas protection atmosphere at a pressure of 0.95 MPa to obtain alloy powder that falls within a particle size range of 15 to 53 µm.
(4) heat preservation and drying: drying the powder sieved in step (3) at a temperature of 100 °C for 12 hours to obtain aluminum alloy powder.

Performing formation of the aluminum alloy powder through an additive manufacturing technique. The process parameters of the additive manufacturing are as follows: the laser power is 400 W, the laser scanning speed is 900 mm/s, the hatch spacing is 0.1 mm, and the layer thickness is 0.03 mm.

Performing heat treatment on the alloy components formed using an additive manufacturing technique at a temperature of 318 °C, keeping the temperature for a duration of 6 hours, and cooling the components together with the furnace to obtain a final aluminum alloy product.

Specific data such as the printing energy density, density, tensile strength at a room temperature (25 °C) and a high temperature (250 °C), and elongation-at-break of the alloy components are shown in Table 1.

### Comparative Embodiment 1 (low Er content)

Except that the Er content is different from that in Embodiment 3, all other conditions are the same as in Embodiment 3.

Chemical components of an erbium-containing aluminum alloy powder for additive manufacturing in this comparative embodiment are: W (Mg): 4.0%; W (Mn): 0.7%; W (Er): 0.4%; W (Sc): 0.1%; W (Zr): 0.69%, W (Si): 0.3%, W (Fe): 0.2%, and the remainder is Al.

### Comparative Embodiment 2 (insufficient Zr content)

Except that the Zr content is different from that in Embodiment 3, all other conditions are the same as in Embodiment 3.

Chemical components of an erbium-containing aluminum alloy powder for additive manufacturing in this comparative embodiment are: W (Mg): 4.0%; W (Mn): 0.7%; W (Er): 0.61%; W (Sc): 0.1%; W (Zr): 0.4%, W (Si): 0.3%, W (Fe): 0.2%, and the remainder is Al.

### Comparative Embodiment 3 (without Fe)

No Fe element is added in the aluminum alloy in this comparative embodiment, and all other conditions are the same as in Embodiment 3.

Chemical components of an erbium-containing aluminum alloy powder for additive manufacturing in this comparative embodiment are: W (Mg): 4.0%; W (Mn): 0.7%; W (Er): 0.61%; W (Sc): 0.1%; W (Zr): 0.69%, W (Si): 0.3%, and the remainder is Al.

A metallographic image of an aluminum alloy formed using an additive manufacturing technique according to this comparative embodiment is shown in FIG. 4.

### Comparative Embodiment 4 (heat treatment temperature does not comply with the rule (T±5) °C, T = 432 - 25000·W(Sc) - 1000·W(Er)).

Except that the heat treatment temperature is different from that in Embodiment 3, all other conditions are the same as in Embodiment 3.

Performing heat treatment on the 3D-printed components at a temperature of 410 °C, keeping the temperature for a duration of 2 hours, and cooling the components together with the furnace.

Specific data such as the printing energy density, density, tensile strength at a room temperature (25 °C) and a high temperature (250 °C), and elongation-at-break of the alloy components in Embodiments 1 to 5 and Comparative Embodiments 1 to 4 are shown in Table 1.

**Table 1 Performance data of alloy components obtained in embodiments and comparative embodiments**

| | Energy density (J/ mm³) | Density (%) | Room-temperature mechanical properties (25 °C) | | High-temperature mechanical properties (250 °C) | |
|---|---|---|---|---|---|---|
| | | | Tensile strength (MPa) | Elongation (%) | Tensile strength (MPa) | Elongation (%) |
| Embodiment 1 | 75.8 | 99.8 | 553 | 12 | 201 | 42 |
| Embodiment 2 | 111 | 99.7 | 580 | 11 | 219 | 38 |
| Embodiment 3 | 92.6 | 99.9 | 511 | 16 | 183 | 44 |
| Embodiment 4 | 55.6 | 99.7 | 546 | 12 | 200 | 42 |
| Embodiment 5 | 148 | 99.6 | 571 | 11 | 212 | 39 |
| Comparative Embodiment 1 | 92.6 | 99.9 | 492 | 16 | 169 | 50 |
| Comparative Embodiment 2 | 92.6 | 99.9 | 488 | 17 | 153 | 44 |
| Comparative Embodiment 3 | 92.6 | 98.3 | 450 | 7 | / | / |
| Comparative Embodiment 4 | 92.6 | 99.9 | 474 | 12 | 145 | 44 |

As can be seen from Embodiments 1 to 5, the alloy made of the components specified herein can produce a crack-free component with a density greater than or equal to 99.5% within a relatively wide process window (that is, within an energy density range of 50 to 150 J/mm³). After appropriate heat treatment, the alloy exhibits excellent mechanical properties at both a room temperature and elevated temperatures: tested at a room temperature, the tensile strength is greater than or equal to 510 MPa, and the elongation is greater than or equal to 10%; and tested at 250 °C, the tensile strength is greater than or equal to 180 MPa, and the elongation is greater than or equal to 30%.

As can be seen from Embodiment 3 and Comparative Embodiment 1, an insufficient Er content leads to a decrease in both room-temperature and high-temperature tensile strength. An insufficient Er content prevents the formation of a sufficient amount of Al₃ (Er, M) eutectic phase at grain boundaries during solidification. Consequently, the grain size is relatively coarse, and the grain growth is not well suppressed at elevated temperatures. This weakens the grain-boundary strengthening effect and reduces both room-temperature and high-temperature mechanical strength.

As can be seen from Embodiment 3 and Comparative Embodiment 2, an insufficient Zr content leads to a decrease in both room-temperature and high-temperature tensile strength. On the one hand, a lower Zr content reduces the amount of Al₃ (Sc, Zr) or Al₃Zr phase precipitated during solidification, and decreases the equiaxed grains formed, thereby hindering grain refinement. On the other hand, a low Zr content prevents the formation of Al₃ (Er, Zr) or Al₃ (Sc, Zr) nanoscale precipitates with a complete core-shell structure during heat treatment, thereby being prone to growing and coarsening at high temperatures, and diminishing the strengthening effect of the precipitates.

As can be seen from Embodiment 3 and Comparative Embodiment 3, when the alloy is doped with Si alone but without Fe, the porosity of the alloy increases (as can be clearly seen from the comparison of FIG. 3 and FIG. 4), thereby reducing the density and the room-temperature tensile strength. A small amount of Fe is conducive to reducing the solidification temperature range, improving the melt fluidity, and improving the formability and component density.

As can be seen from Embodiment 3 and Comparative Embodiment 4, when the heat treatment temperature does not comply with the rule (T±5) °C, T = 432 - 25000·W(Sc) - 1000·W(Er)), both room-temperature tensile strength and high-temperature tensile strength decrease. When the heat treatment temperature is inappropriate, the precipitates are unable to be rapidly and fully formed, or may coarsen, thereby reducing the strengthening effect of the precipitates.

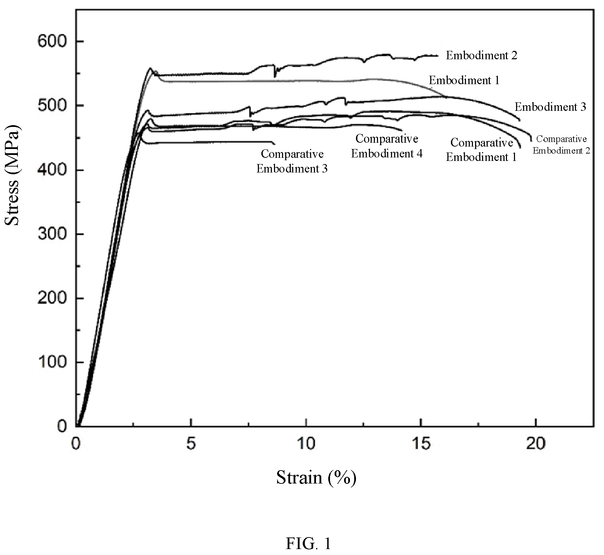

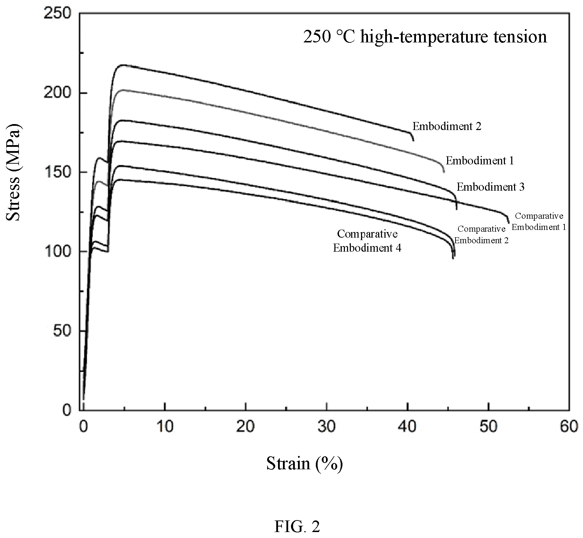

The room-temperature mechanical properties of aluminum alloys formed using an additive manufacturing technique in Embodiments 1 to 3 and Comparative Embodiments 1 to 4 are shown in FIG. 1; and high-temperature (250 °C) mechanical properties of aluminum alloys formed using an additive manufacturing technique according to Embodiments 1 to 3 and Comparative Embodiments 1, 2, and 4 are shown in FIG. 2.

The technical features in the foregoing embodiments may be combined arbitrarily. For brevity, not all possible combinations of the technical features in the embodiments are described. However, to the extent that no conflict exists, all such combinations of the technical features are considered falling within the scope hereof.

The above embodiments merely describe several implementations of this application. The description goes to details, but is in no way to be thereby understood as a limitation on the patent scope hereof. It is to be noted that several variations and improvements, which may be made to the embodiments by a person of ordinary skill in the art without departing from the concept of this application, still fall within the protection scope of this application. Therefore, the protection scope of this application is subject to the claims appended hereto.

## Claims

1. An erbium-containing aluminum alloy for additive manufacturing, **characterized in that** alloying elements in the aluminum alloy by mass percentage are: W (Mg): 4.0% to 7.0%; W (Mn): 0.5% to 0.8%; W (Er): 0.61% to 1.5%; W (Sc): 0.1% to 0.4%; W (Si) + W (Fe): 0.4% to 0.7%; and the remainder is Al, satisfying: 0.2% ≤ W (Fe) ≤ 0.34 W (Er), and 2.6W (Sc) + 0.7W (Er) ≤ W (Zr) ≤ 2.1%.

2. The erbium-containing aluminum alloy for additive manufacturing according to claim 1, **characterized in that** the alloying elements in the aluminum alloy by mass percentage are: W (Mg): 4.0% to 7.0%; W (Mn): 0.5% to 0.7%; W (Er): 0.61% to 1.2%; W (Sc): 0.1% to 0.4%; W (Si) + W (Fe): 0.5% to 0.7%; and the remainder is Al, satisfying: 0.2% ≤ W (Fe) ≤ 0.34W (Er), and 2.6W(Sc) + 0.7W (Er) ≤ W (Zr) ≤ 1.8%.

3. The erbium-containing aluminum alloy for additive manufacturing according to claim 1 or 2, **characterized in that** a preparation method of the alloy powder comprises:
S1: raw material melting: heating and melting pure metal or master alloy raw materials in vacuum conditions based on a formulation to obtain a pre-alloyed metal;
S2: atomization to make powder: atomizing the melted pre-alloyed metal using argon to obtain pre-alloyed metal powder;
S3: powder sieving: sieving and classifying the pre-alloyed metal powder prepared in step S2 in an inert gas protection atmosphere;
S4: heat preservation and drying: drying the powder sieved in step S3 to obtain aluminum alloy powder.

4. A preparation method of the erbium-containing aluminum alloy powder for additive manufacturing according to claim 3, **characterized in that**, in step S1, the melting is performed at a temperature of 700 °C to 850 °C for a duration of 10 to 40 minutes.

5. The preparation method of the erbium-containing aluminum alloy powder for additive manufacturing according to claim 3, **characterized in that**, in step S2, an atomization gas pressure for the atomization to make powder is 0.8 to 4.0 MPa.

6. The preparation method of the erbium-containing aluminum alloy powder for additive manufacturing according to claim 3, **characterized in that**, in step S3, a pressure of the inert gas protection atmosphere is 0.05 to 0.95 MPa, and a particle size range of the sieved powder is 15 to 53 µm; and in step S4, the drying is performed at a temperature of 100 °C to 120 °C for a duration of 4 to 12 hours.

7. An erbium-containing aluminum alloy for additive manufacturing according to claim 1 or 2, and a preparation method and use thereof, **characterized in that** aluminum alloy component is prepared using an additive manufacturing technique.

8. The erbium-containing aluminum alloy for additive manufacturing, and the preparation method and use thereof according to claim 7, **characterized in that** process parameters of the additive manufacturing are as follows: a laser power is 250 to 400 W; a laser scanning speed is 900 to 1500 mm/s; a hatch spacing is 0.09 to 0.11 mm; and a layer thickness is 0.02 to 0.04 mm.

9. The erbium-containing aluminum alloy for additive manufacturing, and the preparation method and use thereof according to claim 7, **characterized in that** the alloy component formed using an additive manufacturing technique is subjected to heat treatment to obtain a final aluminum alloy product, wherein
the heat treatment is performed at a temperature of 312 °C to 405 °C, the temperature is kept for a duration of 2 to 8 hours, and the alloy component is cooled together with a furnace to obtain the final aluminum alloy product.

10. The erbium-containing aluminum alloy for additive manufacturing, and the preparation method and use thereof according to claim 7, **characterized in that** the heat treatment is performed at a temperature of (T±5) °C, wherein T = 432 - 25000W(Sc) - 1000W(Er).
